# EUROPÄISCHE PATENTSCHRIFT

(11) **EP 1 189 425 B1**
(45) Veröffentlichungstag und Bekanntmachung des Hinweises auf die Patenterteilung: **09.04.2008**
(21) Anmeldenummer: 01117065.1
(22) Anmeldetag: 13.07.2001
(51) Int. Cl.: H04N 1/191

(54) **Mehrstrahl-Belichtungsverfahren**
Multi-beam exposure method
Procédé d'exposition utilisant plusieurs faisceaux

(30) Priorität: 13.09.2000 DE 10045168
(43) Veröffentlichungstag der Anmeldung: 20.03.2002
(73) Patentinhaber: HELL Gravure Systems GmbH & Co. KG, 24148 Kiel (DE)
(72) Erfinder: Ressel, Peter, 24232 Schönkirchen (DE); Scheffler, Andreas, 24143 Kiel (DE)

(56) Entgegenhaltungen:
- EP-A- 0 568 283
- EP-A- 0 918 255
- US-A- 5 124 720
- US-A- 5 343 271
- W. BACHTOLD ET AL: "Facsimile Equipment and Document I/O Device" IBM TECHNICAL DISCLOSURE BULLETIN, Bd. 15, Nr. 5, - 31. Oktober 1972 (1972-10-31) Seiten 1558-1559, XP002256264

## Beschreibung

Die Erfindung bezieht sich auf das Gebiet der elektronischen Reproduktionstechnik und betrifft ein Verfahren zur Belichtung von Aufzeichnungsmaterialien mit mehreren beispielsweise parallelen Laserstrahlen, deren Helligkeit in Abhängigkeit von der aufzuzeichnenden Information gesteuert wird, gemäß des Oberbegriffs des Anspruchs 1.

In der elektronischen Reproduktionstechnik werden Mehrstrahl-Belichtungsverfahren zur Belichtung von Druckformen eingesetzt, um eine ausreichend hohe Belichtungsgeschwindigkeit sowie eine ausreichend hohe Belichtungsintensität zu erzielen. Dazu wird ein Bündel von N parallelen Laserstrahlen relativ zum Aufzeichnungsmaterial bewegt, und mit jedem Überstreichen werden N Zeilen der aufzuzeichnenden Bilddaten gleichzeitig belichtet. Die Druckformen können auf Filmmaterial belichtet werden, so daß sogenannte Farbauszugsfilme entstehen, die anschließend mittels eines fotografischen Umkopierverfahrens zur Herstellung von Druckplatten dienen. Statt dessen können auch die Druckplatten selbst in einem Mehrstrahl-Plattenbelichter oder in einer digitalen Druckmaschine belichtet werden. Schließlich gibt es auch die Anwendung von Mehrstrahl-Belichtungsverfahren, um Flexodruckformen oder Tiefdruckformen durch selektives Abtragen von Material mit Laserstrahlen hoher Leistung herzustellen. Das Aufzeichnungsmaterial kann sich auf einer Trommel befinden (Trommelbelichter), in einer zylindrischen Mulde (Innentrommelbelichter) oder auf einer ebenen Platte (Flachbettbelichter).

Zur Erzeugung von parallelen Laserstrahlen sind eine Reihe von optischen Anordnungen und Prinzipien bekannt. Beispielsweise wird ein Laserstrahl mittels eines akustooptischen Modulators in mehrere einzeln modulierte Strahlen aufgespaltet. Man kann auch mehrere Laser verwenden, von denen jeder mit einem separaten akustooptischen Modulator moduliert wird. Oder man verwendet mehrere in einer Reihe angeordnete Laserdioden, die einzeln moduliert werden. Eine Reihe von Laserdioden kann auch in einem Laserdiodenchip integriert sein. Alternativ kann mit einer Laserdiode ein breites Lichtband erzeugt werden, vor dem eine Reihe von einzeln steuerbaren Lichtventilen angeordnet ist.

Unabhängig von dem Anwendungsfall, d.h. welche Art von Druckform auf welchem Aufzeichnungsmaterial hergestellt wird, und unabhängig von der verwendeten mechanischen und optischen Anordnung besteht bei allen Mehrstrahl-Belichtungsverfahren das Problem, daß beim Ausfall eines der parallelen Laserstrahlen der Belichter bis zur Reparatur der Belichtungseinheit entweder überhaupt nicht mehr verwendet werden kann oder eine eingeschränkte Arbeitsweise mit den verbliebenen noch funktionstüchtigen Laserstrahlen nur mit einer aufwendigen und komplizierten Steuerungseinheit möglich ist.

Aus der US-A-5 124 720 ist ein Inkjet-Drucker bekannt, bei dem ein elektronisches Mehrzeilenreproduktionsverfahren benutzt wird. Bei einem Fehler im Druckkopf wird dort die Datenverteilung an Eingangsstufen des Druckkopfes durch einen Adressierungsstopp mangelhafter Stufen verändert. Dabei wird die normale Arbeitsweise einer Steuereinheit unterbrochen und später die Hardware für einen weiteren Betrieb verändert.

Aus dem Fachartikel von W. Bachtold et al: "Fasimile Equipment and Document I/O Device" IBM TECHNICAL DISCLOSURE BULLETIN, Bd. 15, Nr. 5, - 31. Oktober 1972 (1972-10-31) Seiten 1558-1559, XP002256264, ist ein optischer Drucker in einer Faksimileanordnung bekannt. Die Schreibdaten werden zyklisch auf Schreibkanäle verteilt. Es findet aber keine Fehlerkorrektur statt.

Aufgabe der vorliegenden Erfindung ist es daher, ein Verfahren zur Mehrstrahl-Belichtung von Aufzeichnungsmaterialien der eingangs genannten Gattung anzugeben, bei dem, bei einem Fehler im Optikkopf, eine normale Arbeitsweise der Datenverteilung an die Eingangsstufen des Optikkopfes möglich bleibt.

Diese Aufgabe wird durch die Merkmale des Anspruchs 1 gelöst. Vorteilhafte Ausgestaltungen und Weiterbildungen sind in den Unteransprüchen angegeben.

Der Stand der Technik und das erfindungsgemäße Verfahren werden nachfolgend anhand der Figuren 1 bis 4 näher erläutert. Es zeigen:
- Fig. 1: ein Ausführungsbeispiel für eine Mehrstrahl-Belichtungsvorrichtung in einem Trommelbelichter (Stand der Technik),
- Fig. 2: die Funktionsweise des Verteilers im Normalbetrieb (Stand der Technik),
- Fig. 3: die Funktionsweise des Verteilers bei Ausfall eines Laserstrahls (Stand der Technik), und
- Fig. 4: die Reihenfolge der Aufzeichnungszeilen nach der Erfindung im Druckformspeicher, auf der Datenleitung und im Pufferspeicher.

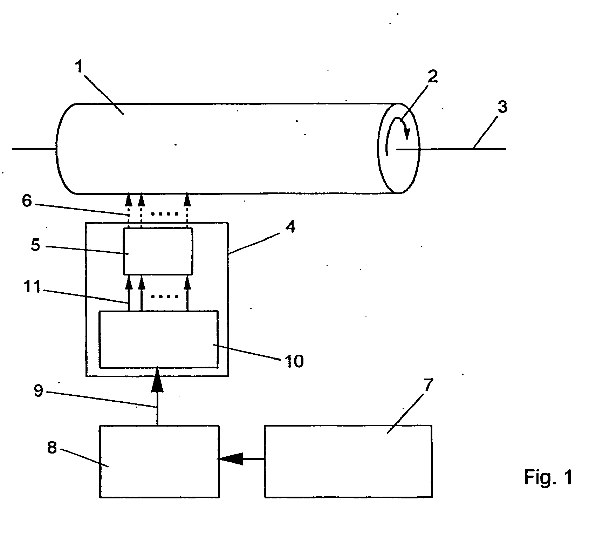

Fig.1 zeigt ein Ausführungsbeispiel für eine als Trommelbelichter ausgebildete Mehrstrahl-Belichtungsvorrichtung nach dem Stand der Technik mit einer Aufzeichnungstrommel 1, die in Umfangsrichtung 2 um eine Längsachse 3 drehbar gelagert ist. In Richtung der Längsachse 3 bewegt sich eine Belichtungseinheit 4 an der Aufzeichnungstrommel 1 entlang, die einen Optikkopf 5 enthält, in dem N parallele Laserstrahlen 6 erzeugt und moduliert werden. Durch die Rotationsbewegung der Aufzeichnungstrommel 1 und die Vorschubbewegung der Belichtungseinheit 4 erfolgt eine flächenhafte punkt- und zeilenweise Belichtung eines auf der Aufzeichnungstrommel 1 befestigten Aufzeichnungsmaterials durch die helligkeitsmodulierten Laserstrahlen. Die Vorschubgeschwindigkeit wird so eingestellt, daß sich die Belichtungseinheit 4 nach einer Umdrehung der Aufzeichnungstrommel 1 um die Gesamtbreite der N parallel aufgezeichneten Laserspuren weiterbewegt hat.

Die Druckformdaten der aufzuzeichnenden Druckform werden in einem Rechner 7 in bekannter Weise aus gescannten Bildern, grafischen Elementen und eingegebenen Texten erzeugt und zu einer Druckform zusammengestellt. Die so vorbereiteten Druckformdaten werden im Druckformspeicher 8 bereitgestellt. Bei der Belichtung werden die Druckformdaten aus dem Druckformspeicher 8 zeilenweise ausgelesen und über eine Datenleitung 9 zu einem Verteiler 10 übertragen, der in dem Ausführungsbeispiel in der Belichtungseinheit 4 enthalten ist. Der Verteiler 10 verteilt die über die Datenleitung 9 ankommenden Aufzeichnungszeilen zyklisch auf die N Schreibkanäle 11, mit denen die Zeilen parallel an den Optikkopf 5 übergeben werden.

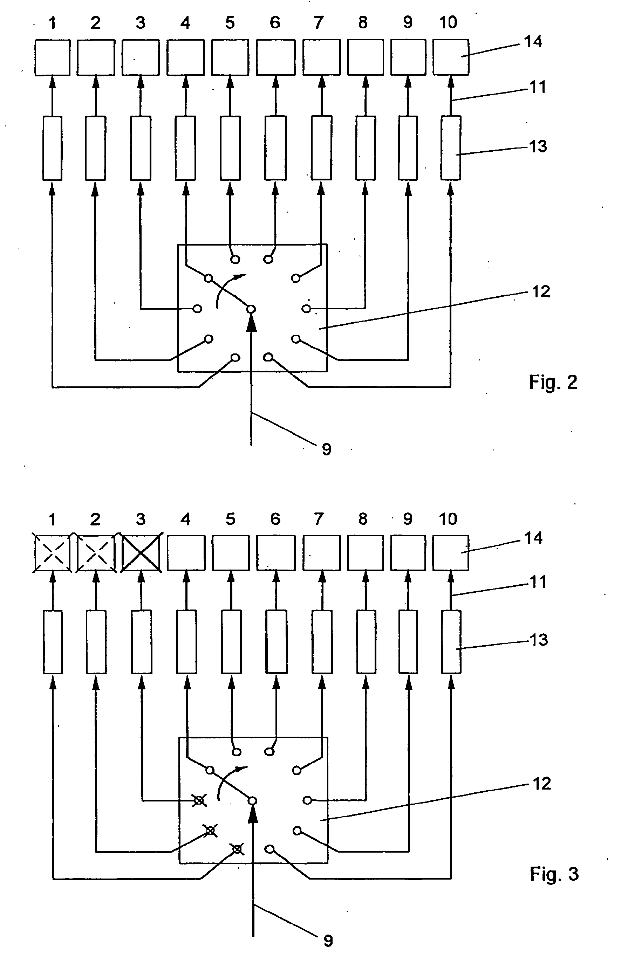

Fig. 2 zeigt die Funktion des Verteilers 10 beispielhaft für eine Belichtungseinheit 5, die mit N=10 Laserstrahlen aufzeichnet. Die vom Druckformspeicher 8 über die Datenleitung 9 kommenden Aufzeichnungszeilen werden von einem Demultiplexer 12, der schematisch als Drehschalter dargestellt ist, zyklisch in die Pufferspeicher 13 geschrieben. Mit den Pufferspeichern 13 werden die zeitlichen Abläufe im Druckformspeicher 8 einerseits und in der Belichtungseinheit 4 andererseits entkoppelt. Aus den Pufferspeichern 13 werden dann jeweils zehn Aufzeichnungszeilen parallel über die Schreibkanäle 11 an die Eingangsstufen 14 des Optikkopfes 5 übergeben.

Wenn durch einen Fehler im Optikkopf 5 einer oder mehrere Laserstrahlen 6 nicht genutzt werden können, ist bis zur Reparatur des Fehlers noch eine eingeschränkte Arbeitsweise des Belichters mit einer zusammenhängenden Gruppe von verbleibenden Laserstrahlen 6 möglich. Fig. 3 zeigt einen solchen Fall an einem Beispiel. In dem Beispiel ist angenommen, daß der Laserstrahl Nr. 3 ausgefallen ist, was in Fig. 3 durch ein dickes Kreuz in der entsprechenden Eingangsstufe 14 gekennzeichnet ist. Die größte zusammenhängende Gruppe von verbleibenden Laserstrahlen 6 sind dann die Laserstrahlen Nr. 4 bis Nr. 10. Mit dieser Gruppe kann weiterhin belichtet werden, wenn der Demultiplexer 12 so umkonfiguriert wird, daß er die ankommenden Aufzeichnungszeilen nur noch zyklisch in die zu den Laserstrahlen Nr. 4 bis Nr. 10 gehörenden Pufferspeicher 13 schreibt. Die ersten drei Verteilungspositionen des Demultiplexers 12 müssen dabei übersprungen werden, was in Fig. 3 durch Kreuze in den jeweiligen Positionen gekennzeichnet ist, d.h. der Demultiplexer 12 muß so arbeiten, als hätte er nur noch sieben Verteilungspositionen. Außerdem müssen die Laserstrahlen Nr. 1 und Nr. 2 ausgeschaltet werden, was in Fig. 3 durch ein gestricheltes Kreuz in den entsprechenden Eingangsstufen 14 gekennzeichnet ist. Zusätzlich muß die Vorschubgeschwindigkeit so eingestellt werden, daß sich die Belichtungseinheit 4 nach einer Umdrehung der Aufzeichnungstrommel 1 nur noch um die Gesamtbreite der verbliebenen sieben parallel aufgezeichneten Laserspuren weiterbewegt hat.

Um den Demultiplexer 12 nach dem Stand der Technik für alle denkbaren Variationen von einem oder mehreren ausgefallenen Laserstrahlen 6 so umkonfigurieren zu können, daß die Aufzeichnungszeilen immer in optimaler Weise auf die jeweils verbleibende größte Restgruppe der Laserstrahlen 6 verteilt werden, wird eine aufwendige Steuerung des Verteilers 10 benötigt. Für weitere Untereinheiten der Belichtungseinheit 4 kann ebenfalls eine komplexe Steuerung erforderlich werden, um das Belichtungssystem auf weniger Laserstrahlen umzustellen. Eine solche Untereinheit ist zum Beispiel die Erzeugung der Hochfrequenz-Modulationsfrequenzen zur Ansteuerung eines oder mehrerer akustooptischer Modulatoren.

Ob ein Fehler der beschriebenen Art vorliegt und welche Laserstrahlen ausgefallen sind, wird im einfachsten Fall durch ein Testbelichtung festgestellt, die anschließend z.B. mit einem Mikroskop analysiert wird. Es sind auch Lösungen denkbar, bei denen der Ausfall der Laserstrahlen durch Detektoren im Optikkopf 5 festgestellt und an die Steuersoftware des Belichters gemeldet wird.

Mit dem erfindungsgemäßen Mehrstrahl-Belichtungsverfahren wird das Problem der ausgefallenen Laserstrahlen 6 gelöst, ohne daß der Demultiplexer 12 umkonfiguriert werden muß, d.h. ohne die dafür notwendige aufwendige Steuerung des Verteilers 10. Nach dem erfindungsgemäßen Verfahren werden die Pufferspeicher 13, die zu den nicht mehr an der Aufzeichnung beteiligten Laserstrahlen 6 gehören, mit "leeren" Aufzeichnungszeilen (Leerzeilen) gefüllt, d.h. mit Datenwerten, die die entsprechenden Laserstrahlen 6 so modulieren, daß diese Laserstrahlen 6 dunkel bleiben. Dazu werden beim Senden der Aufzeichnungszeilen über die Datenleitung 9 vom Rechner 7 die Leerzeilen an den benötigten Stellen in der Folge der gesendeten Aufzeichnungszeilen eingefügt. Die Auflösung der Leerzeilen wird an die Auflösung der Druckformdaten angepaßt, d.h. die Zahl der Bildpunkte in den Leerzeilen und in den Zeilen der Druckformdaten ist gleich.

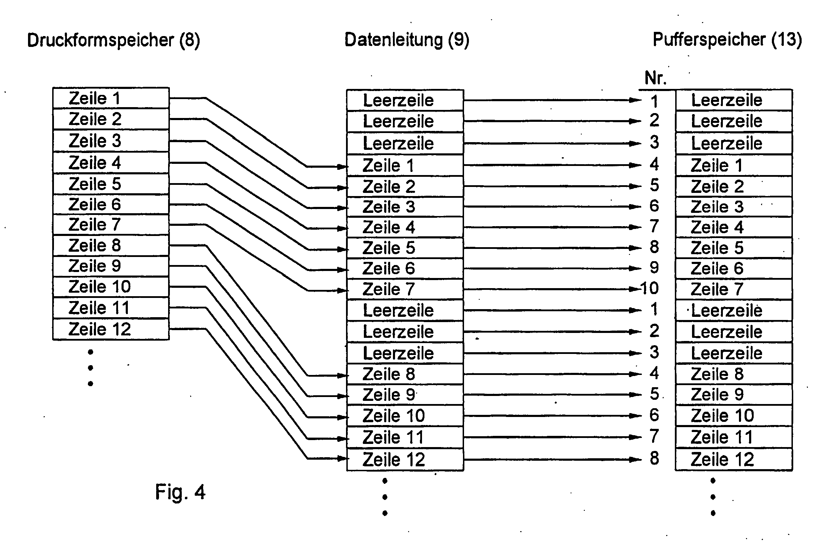

Fig. 4 veranschaulicht das Verfahren für das zuvor erläuterte Beispiel, daß der Laserstrahl Nr. 3 ausgefallen ist und das Belichtungssystem nur noch mit der Untergruppe der Laserstrahlen Nr. 4 bis Nr. 10 arbeitet. Der Rechner 7 sendet auf der Datenleitung 9 zunächst drei aufeinanderfolgende Leerzeilen, danach die aus dem Druckformspeicher 8 gelesenen Zeilen 1 bis 7, danach wieder drei Leerzeilen, dann die aus dem Druckformspeicher 8 gelesenen Zeilen 8 bis 14, usw. Der Demultiplexer 12 verteilt die auf der Datenleitung 9 gesendeten Zeilen in seiner normalen Arbeitsweise zyklisch auf die Pufferspeicher Nr. 1 bis Nr. 10. Dabei werden die eingefügten Leerzeilen immer in die Pufferspeicher Nr. 1 bis Nr. 3 geschrieben, und die aus dem Druckformspeicher 8 gelesenen Zeilen 1 bis 7, 8 bis 14, usw. werden immer in die Pufferspeicher Nr. 4 bis Nr. 10 geschrieben. Zusätzlich wird die Vorschubgeschwindigkeit so eingestellt, daß sich die Belichtungseinheit 4 nach einer Umdrehung der Aufzeichnungstrommel 1 nur noch um die Gesamtbreite der verbliebenen sieben Laserspuren weiterbewegt hat, die die Zeilen 1 bis 7, 8 bis 14, usw. aus dem Druckformspeicher 8 aufzeichnen.

In einer alternativen Ausführungsform des erfindungsgemäßen Verfahrens fügt der Rechner 7 bereits während der Vorbereitung der Druckformdaten die Leerzeilen an den erforderlichen Stellen in den Druckformspeicher 8 ein. In dem Fall werden die Zeilen während der Aufzeichnung in der gleichen Reihenfolge über die Datenleitung 9 zur Belichtungseinheit 4 gesendet, wie sie im Druckformspeicher 8 vorgefunden werden. In einer weiteren alternativen Ausführungsform werden im Optikkopf 5 die Laserstrahlen 6 abgeschaltet, die nicht aktiv sein sollen. Die Leerzeilen brauchen dann keine Datenwerte zu enthalten, mit denen die nicht aktiven Laserstrahlen 6 dunkel gesteuert werden, sondern können beliebige Druckformdaten enthalten.

Das erfindungsgemäße Mehrstrahl-Belichtungsverfahren eignet sich für alle Anwendungsfälle der Druckformaufzeichnung, d.h. für alle Arten von Druckformen und Aufzeichnungsmaterialien sowie für alle mechanischen und optischen Variationen von Mehrstrahl-Belichtungsanordnungen, insbesondere für Trommelbelichter, Innentrommelbelichter und Flachbettbelichter.

## Patentansprüche

1. Verfahren zur Mehrstrahl-Belichtung einer Druckform mit Laserstrahlen (6), bei dem ein Rechner (7) Druckformdaten als eine Folge von Aufzeichnungszeilen über eine Datenleitung (9) an einen Verteiler (10) überträgt, der einen Pufferspeicher (13) enthält, und der Verteiler die Aufzeichnungszeilen zyklisch auf die Eingangsstufen (14) eines Optikkopfes (5) verteilt, in dem N parallele Laserstrahlen (6) erzeugt und mit den Druckformdaten der Aufzeichnungszeilen moduliert werden, und bei dem durch eine Hauptabtastbewegung und eine Untertastbewegung durch den Optikkopf (5) eine flächenhafte punkt- und zeilenweise Belichtung der Druckform erfolgt, wobei, wenn durch einen Fehler im Optikkopf (5) ein oder mehrere Laserstrahlen (6) nicht genutzt werden können, die Laserstrahlen (6) in aktive und nicht aktive Laserstrahlen unterteilt werden und die aktiven Laserstrahlen die größte zusammenhängende Gruppe von verbleibenden Laserstrahlen enthalten und die nicht aktiven Laserstrahlen die restlichen Laserstrahlen einschließlich eines oder mehrerer nicht nutzbarer Laserstrahlen enthalten, und wobei die Unterabtastgeschwindigkeit so eingestellt wird, dass sich der Optikkopf (5) nach einer Hauptabtastbewegung nur um eine Breite einer Spur der verbliebenen Laserstrahlen bewegt,
**dadurch gekennzeichnet,**
**dass** für die nicht aktiven Laserstrahlen in den Pufferspeicher (13) Leerzeilen in die übertragene Folge der Aufzeichnungszeilen eingefügt werden, derart
**dass** beim Senden der Aufzeichnungsdaten über die Datenleitung (9) die Leerzeilen vom Rechner an den benötigten Stellen in der Folge der gesendeten Aufzeichnungszeilen eingefügt werden und der Verteiler (10) in seiner normalen Arbeitsweise die auf der Datenleitung (9) gesendeten Zeilen zyklisch auf den Pufferspeicher (13) verteilen kann.

2. Verfahren nach Anspruch 1, **dadurch gekennzeichnet, dass** die Leerzeilen Datenwerte enthalten, mit denen die nicht aktiven Laserstrahlen dunkel gesteuert werden.

3. Verfahren nach Anspruch 1, **dadurch gekennzeichnet, dass** die Leerzeilen beliebige Datenwerte enthalten und die nicht aktiven Laserstrahlen abgeschaltet werden.

## Claims

1. Method for multiple beam exposure of a printing form with laser beams (6), whereby a computer (7) transmits printing form data as a series of recording lines via a data lead (9) to a distributor (10) which contains a buffer memory (13), and the distributor cyclically distributes the recording lines to the input stages (14) of an optical head (5) in which N parallel laser beams (6) are generated and modulated with the printing form data of the recording lines, and whereby the optical head (5) makes an areawise exposure of the printing form dot by dot and line by line by executing a primary scanning motion and a secondary scanning motion, such that, if one or more laser beams (6) cannot be used because of a defect in the optical head (5), the laser beams (6) are divided into active and inactive laser beams and the active laser beams comprise the largest coherent group of remaining laser beams and the inactive laser beams comprise the residual laser beams including one or more unusable laser beams, and such that the secondary scanning speed is set so that the optical head (5) shifts by only a width of one track of the remaining laser beams after making a primary scanning movement, **characterized in that** blank lines are inserted in place of the inactive laser beams in the sequence of recording lines transmitted to the buffer memory (13) so that, upon transmission of recording data via the data lead (9), blank lines are inserted by the computer at the required positions in the sequence of the transmitted recording lines and the distributor (10) is able to cyclically distribute the lines transmitted on the data lead (9) to the buffer memory (13) in normal operating mode.

2. Method according to Claim 1, **characterized in that** the blank lines contain data values that blank out the inactive laser beams.

3. Method according to Claim 1, **characterized in that** the blank lines contain any data values, and the inactive laser beams are switched off.

## Revendications

1. Procédé d'exposition à plusieurs faisceaux, d'une forme d'impression avec des faisceaux laser (6), selon lequel un calculateur (7) transmet des données de forme d'impression à un répartiteur (10) sous la forme d'une succession de lignes d'inscription par une ligne de transmission de données (9), le répartiteur (10) comporte une mémoire-tampon (13) et il répartit les lignes d'inscription de manière cyclique entre les étages d'entrée (14) d'une tête optique (5), dans laquelle on génère N faisceaux laser parallèles (6) et on module les lignes d'inscription avec les données du format d'impression et selon lequel, par un mouvement de détection principal et un mouvement de détection secondaire effectués par la tête optique (5), on expose en surface, la forme d'impression par une exposition point par point et ligne par ligne,
et si on ne peut utiliser un ou plusieurs faisceaux laser (6) à cause d'un défaut de la tête optique (5), les faisceaux laser (6) sont répartis en faisceaux laser actifs et en faisceaux laser non actifs et les faisceaux laser actifs contiennent le plus grand groupe cohérent de faisceaux laser subsistants et les faisceaux laser non actifs comprennent les faisceaux laser restants y compris un ou plusieurs faisceaux laser non utilisables et
la vitesse de sous-détection est réglée pour que la tête optique (5) se déplace après son mouvement de détection principal, seulement d'une largeur d'une piste des faisceaux laser subsistants,
**caractérisé en ce que**
pour les faisceaux laser non actifs, on insère des lignes vides dans la mémoire-tampon (13) dans la succession transmise des lignes d'inscription de façon qu'à l'émission des données d'inscription par la ligne de transmission de données (9), les lignes vides soient insérées par le calculateur aux endroits appropriés dans la suite des lignes d'inscription émises et le répartiteur (10) peut répartir au cours de son fonctionnement normal, les lignes envoyées par la ligne de transmission de données (9), cycliquement vers la mémoire-tampon (13).

2. Procédé selon la revendication 1,
**caractérisé en ce que**
les lignes vides contiennent des valeurs de données à l'aide desquelles on commande un éclairage sombre des faisceaux laser non activés.

3. Procédé selon la revendication 1,
**caractérisé en ce que**
les lignes vides contiennent n'importe quelles données et les faisceaux laser non activés sont coupés.
